# EUROPEAN PATENT SPECIFICATION

(11) **EP 3 155 895 B1**
(45) Date of publication and mention of the grant of the patent: **06.03.2019**
(21) Application number: 15189754.3
(22) Date of filing: 14.10.2015
(51) Int. Cl.: A01G 23/00, B66C 1/68, B66C 23/86, B66C 1/58

(54) **PILLAR SUITABLE FOR FOREST MACHINE**
SÄULE FÜR FORSTMASCHINE
MONTANT POUR MACHINE FORESTIÈRE

(43) Date of publication of application: 19.04.2017
(73) Proprietor: Deere & Company, Moline, IL 61265 (US)
(72) Inventor: Jokinen, Jarkko, 33820 Tampere (FI); Sahoo, Ghanashyam, 759145 Nalco Nagar (IN)
(74) Representative: John Deere GmbH & Co. KG

(56) References cited:
- EP-A1- 2 165 962
- US-A- 3 112 035
- US-A- 3 589 526
- US-A- 3 738 500

## Description

### Field of the invention

The invention relates to a pillar suitable in and determined for a machine handling and/or processing logs, especially pillars for booms used in wood handling like forestry machines or cranes. Further the invention relates to a forest machine, an arrangement supporting and moving a boom unit of a forest machine and a method of maintaining the reliability of a two-part cantilever fashion pillar useful in a machine handling logs.

### Background of the invention

Forest harvesters are employed effectively in level to moderately steep terrain for clear cutting areas of forest. An extensible articulated boom reaches out from a vehicle to carry the harvester head.

"Combi" machines are available which combine the felling capability with the load-carrying capability of a forwarder, allowing a single operator and machine to fell, process and transport trees. In the description forwarders and combi machines are also included when harvesters are mentioned, if the function in question is similar to the function in a harvester. Furthermore, so-called forwarders load and transport logs created by forest harvesters. All these kinds of machines comprise a boom rotating about a vertical axis or an axis, which is more or less inclined with respect to a vertical direction.

In conventional forest machines welded pillars are used for supporting and moving the boom unit. In the region in which a rotary drive engages frequently signs of wear occur. To avoid these signs of wear high-quality materials must be used for the pillar, which are very costly.

WO2006/062458A1 shows in figure 7 a cantilever kind pillar "A" with a lower and an upper part, whereas the lower part rotates in a base "P". Typically the two parts are made individually and welded together. The welding process sets limits as to the materials used. Prior art of EP 2 165 962 A1 has a similar connection between the lower and the upper part.

US2006/0285962A1 shows the parts of a pillar in more detail. However, this pillar is not of a cantilever kind and needs a counter bearing to resist the bending forces.

US3738500A shows a rotatable mounting for boom type loaders having a main brace secured to a disc plate, which is bolted by bolts to a ring with its outer edge forming an inner race. The ring is supported by ball bearings.

### Brief summary of the invention

It is an aim of the invention to provide a new reliable cantilever type pillar useful in a machine handling logs.
The aim of the invention is achieved with a pillar according to claim 1, a forest machine according to claim 12, and an arrangement according to claim 13. Preferred variants are described in the dependent claims, the description and the drawings.
According to the invention the pillar comprises a lower part and an upper part. The lower part is designed to be brought in contact with a rotary drive. It holds the pillar in a cantilever fashion in a structure. The upper part is designed to receive a portion of a boom. The lower and the upper part are connected to each other releasably.
The lower and the upper part of the pillar may be of the same material.
In a particularly advantageous variant of the invention, the two parts are made or different material depending on the required capabilities. This allows the pillar to be made of optimized materials.
The material can be chosen to meet the needs regarding strength, wear resistance, hardness, etc. Even if the same material is chosen it can be treated differently and assume different characteristics.
The invention enables the upper part to be strong, but not so hard to withstand the shocks from the boom, whereas the lower part having teeth and bearing surfaces may have a treated hard surface and can be of a high steel quality to not show wear easily.
In a particularly advantageous embodiment, the lower part consists of a steel, preferably KWG160 (Keycast) and/or 42CrMo4, whereas the upper part is made of a nodular cast iron or a cost effective suitable material that does not need to be welded. The upper part can even be designed from carbon fiber.
The invention makes it is easier to service the pillar, since it is possible to split the parts and lift the upper part with the boom from the lower part. Furthermore the inventive construction makes it easier to assemble the forest machine, because of less weight per piece.

The machine on which the pillar is used may be a forwarder, a tree harvester, a backhoe, a crane or the like.

The rotary drive may be of the rack and pinion type, of a gear against gear type, of a gear in a ring gear, of a crankshaft type with a lever, etc.

The lower and the upper part can be forged or casted or welded, depending on the required capabilities. Due to the possibility to choose the material or its treatment according to the need, the best production method can be chosen.

It is particularly favorable, if the lower and/or the upper part are substantially hollow, since pillars in big forestry machines may assume a diameter of 50 cm. Being of a hollow shape reduces the weight and costs considerably.

In a preferred embodiment of the invention means are provided to assume a positive locking engagement with the lower and the upper part. In particular sleeves or pins extending through aligned holes in both parts, keys are inserted in aligned apertures in both and similar. As the lower part is rotated by a hydraulic or electric drive and the upper part creates a considerable counter force, transfer of the rotational force has less impact on the means connecting the lower and upper parts together, when said rotational movement is transferred by mechanical elements creating a positive or form lock. Such elements may be of many kinds, like steel pins, keys, sleeves etc. being in engagement with both parts in holes or recesses, mating exactly with these elements.

In a variant of the invention the lower and the upper part are bolted together. A particularly efficient way to connect both parts is that of screws extending through holes in one part and into threaded holes in the other or through bolts extending through two through holes and being pulled together by nuts.

In a particularly advantageous variant of the invention a ring or several elements of a ring with holes aligned with bolts connecting the lower and the upper part is provided to transfer load between bolt heads and the lower or upper part. The use of a complete ring or of ring elements, which finally can form an entire ring between the bolt heads and the part helps to better and more equally transfer the loads into the other part. Such fractions of a ring element could also be strong shims being wider than the bolt heads.

In one embodiment of the invention the bolts extend through sleeves. If sleeves are used to rotationally lock the upper and the lower parts, the bolts may extent through these sleeves, which minimizes the production costs, since only one hole is needed for both.

According to the invention, the lower and the upper part are provided with flanges in their abutting area. The flanges have the same or substantially the same diameter. The use of flanges allows to connect the parts further away from a longitudinal center line, where a higher moment against the bending moment of the pillar can be produced. Such a flange makes it easier to install sleeves, keys, bolts, etc. and to produce the respective holes.
In a favorable variant of the invention the lower and the upper part are in positive locking engagement with each other, in particular in the kind of teeth, claws, dogs and similar and are held in their position by bolts. Instead of keys or sleeves through holes in both parts, the parts may have at their facing ends mating meshing face ends, like a claw clutch or the like. This will help to relief the bolts clamping both parts together.
The lower and the upper part of the pillar can also be provided with matching threads to be screwed onto each other in the longitudinal direction of the pillar. Rather than bolting together both parts, in this variant the upper and lower part are screwed onto each other like a nut on a bolt. Once the threat is at its end, the connection can be blocked through cross bolts, or the like. Then the pillar is oriented such that it fits to the boom and to the rotary drive and installed.
In a preferred embodiment the lower part has machined areas each to receive a bearing and a toothed part in between or elsewhere in the lower part. With two bearings the pillar can resist the bending moments normal to the rotary axis. If a toothed area, like a pinion, is located between two bearing areas, the teeth of the pinion will always be in the same radial position and don't wear prematurely. The bearings can be of the thrust bearing, needle bearing, ball bearing or any other type.

The method of maintaining the reliability of a two part cantilever fashion pillar useful in a machine handling logs, which does not fall under the scope of the claims, having a toothed portion at one of the parts being in engagement with a drive for rotating the pillar, comprises the following steps:
- the toothed portion is inspected for wear,
- in case of wear the parts are disconnected from each other,
- the parts are offset with respect to each other such, that a suitable area of the toothed portion may come into engagement with the drive,
- the parts are connected in the new relative position.

This allows to extend the life of the pillar by taking the worn teeth out of operation and use unworn teeth in engagement with the rotary drive.

### Description of the drawings

In the following, the invention is described in more detail with reference to the appended drawings, in which
- Figure 1: shows a typical forest harvester with a pillar according to the invention,
- Figure 2: shows a pillar journalled in a base, whereas an upper part to be connected to a boom is visible and whereas at the base are shown the housings in which racks and rotary drives are moving,
- Figure 3: shows a pillar in a vertical section, whereas an upper and a lower part are bolted to each other directly,
- Figure 4: shows a pillar in a vertical section according to the embodiment in figure 2, whereas an upper and a lower part are bolted to each other and a ring is inserted between the heads of the bolts and the lower surface of the flange of the lower part.

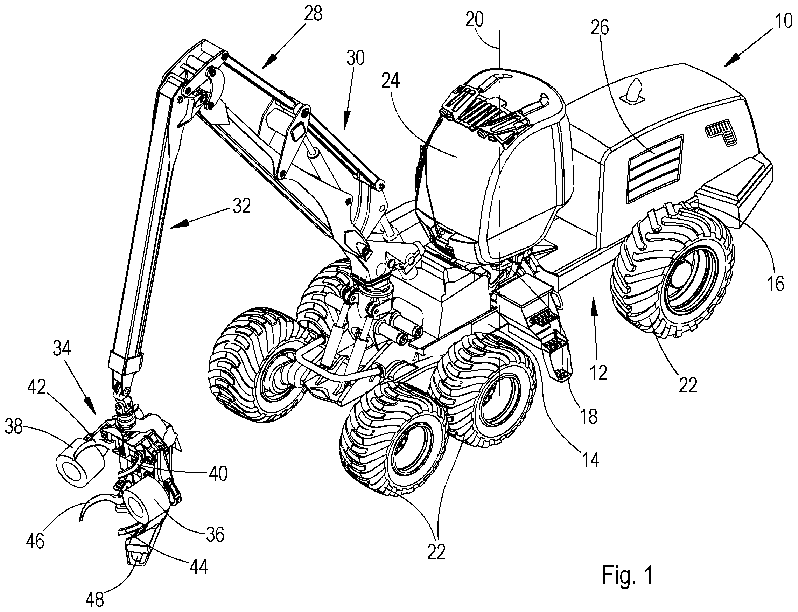

The forest machine shown in Fig. 1 is a forest harvester 10. The forest harvester 10 comprises a chassis 12 with a front frame 14 and a rear frame 16. The front frame 14 and the rear frame 16 are connected with a frame joint 18. The front frame 14 and the rear frame 16 can pivot about the frame joint 18 about an axis 20. While a forest harvester 10 is shown, the forest machine can also be a forwarder or the like.

The chassis 12 is equipped with wheels 22. Two pairs of wheels 22 are amounted to the front frame 14 and one pair of wheels 22 is mounted to the rear frame 16. The size of the rear wheels 22 is greater than that of the front wheels 22.

The front frame 14 carries a cabin 24.

The rear frame 16 carries a power source 26, for example a combustion engine.

A boom unit 28 is in conjunction with the front frame 14. The boom unit 28 comprises a first boom 30 and a second boom 32.

A harvester head 34 is connected to the second boom 32 of the boom unit 28. The harvester head 34 comprises a first roller 36, a second roller 38, a first upper knife 40, a second upper knife 42, a first lower knife 44, a second lower knife 46 and a chain saw 48.

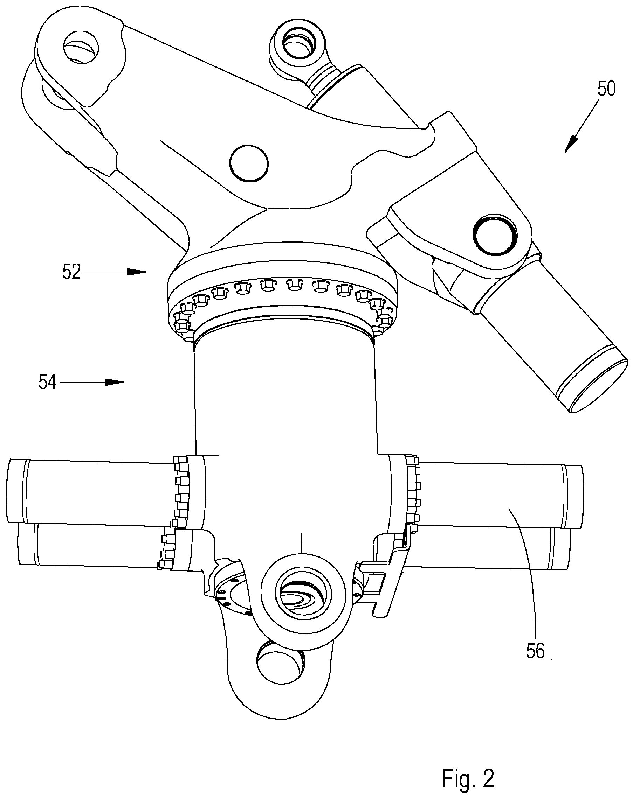

Fig. 2 shows a perspective view of an arrangement 50 useful for supporting and moving the boom unit 28 of the forest machine. The arrangement 50 comprises a pillar 52 and a base 54.

The base 54 comprises a rotary drive, which comprises hydraulic cylinders 56.

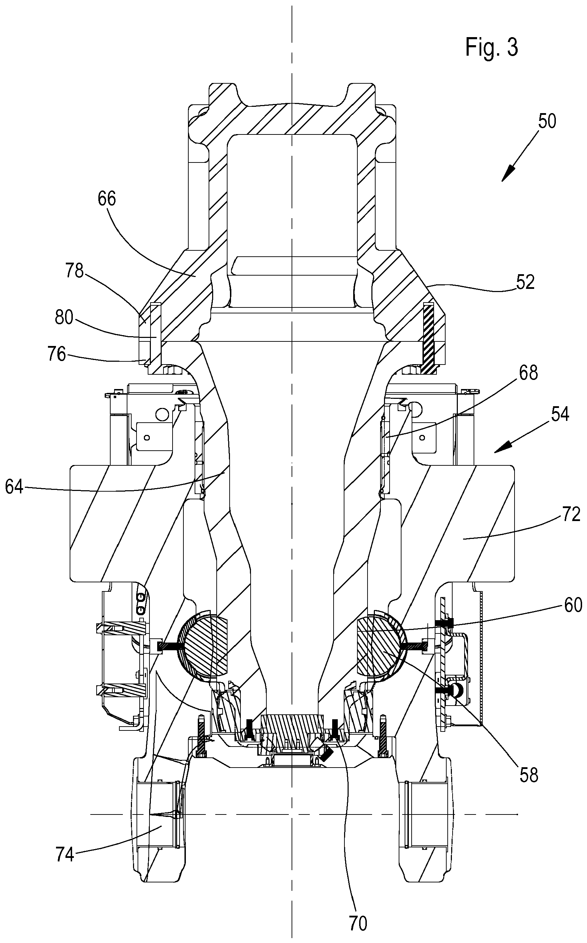

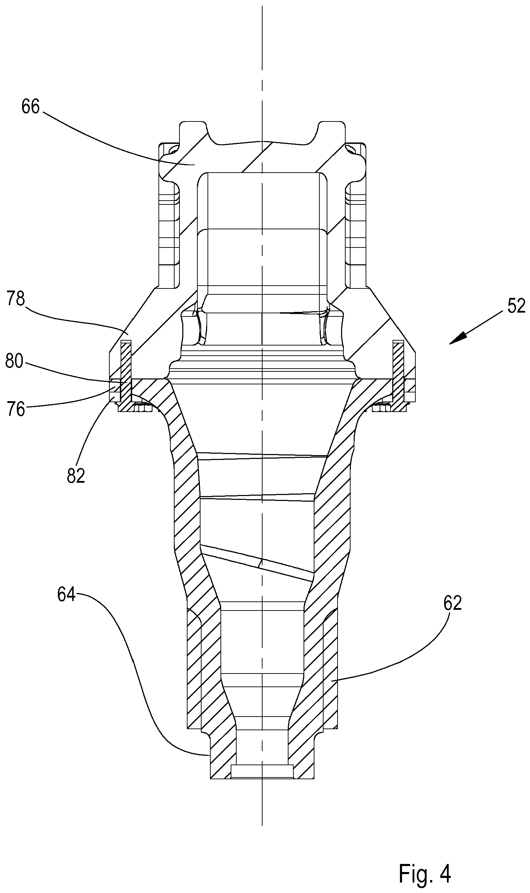

The hydraulic cylinders 56 are moving racks 58, which are shown in Fig. 3. Each rack 58 has a pinion 60. The pinions 60 are in engagement with a toothed portion 62 of the pillar 52, which is shown in Fig. 4.

The pillar 52 comprises a lower part 64 and an upper part 66. The toothed portion 62 is integrally formed with the lower part 64 of the pillar 52 in form of a toothed rim.

The racks 58 shown in Fig. 3 are moved by the hydraulic cylinder 56 in order to generate a rotational movement of the pillar 52. The pillar 52 is guided with radial bearings 68 and axial bearings 70.

In the embodiment the rotary drive is formed by racks 58 having teeth 60 in engagement with the toothed portion 62 of the pillar 52 and hydraulic cylinders 56 moving the racks 58.

The base 54 comprises a housing 72 forming a space, in which the lower part 64 is arranged to rotate about a vertical or close to vertical axis.

Furthermore, the housing 72 comprises formations for the guidance of the racks 58.

The housing 72 may be constructed in one piece by casting and/or welding. It comprises ring structures as guide elements 74 for a pivotal movement, which is generated with hydraulic cylinders, which are not shown in the figures.

These hydraulic cylinders are in connection with the front frame 14. Pistons are arranged in these cylinders.

The housing 72 has a cylinder-like cavity, which extends in a vertical direction, for receiving the lower part 64 of the pillar 52. In a horizontal direction, the housing 72 comprises channels for guiding the racks 58.

According to the invention the lower part 64 and the upper part 66 of the pillar 52 are connected to each other releasably.

The lower part 64 and the upper part 66 of the pillar 52 are substantially hollow.

Both parts 64, 66 are provided with flanges 76, 78 in their abutting area.

The flanges 76, 78 have the same diameter. Flange 76 is integral with the lower part 64. Flange 78 is integral with the upper part 66.

In the embodiment shown in Fig. 3 and Fig. 4 the ring of the flange 76 of the lower part 64 is provided with through bores. The ring of the flange 78 of the upper part 66 is provided with bores, which extends into a material accumulation.

Means 80 are inserted into the bores in order to connect the lower part 64 and the upper part 66 of the pillar 52 releasably.

These means 80 can be designed as pins, bolts or screws having a thickened portion on one end which serve as a stop.

The means 80 extend through the holes of the flange 76 into the holes of flange 78.

The holes may be provided with an integral thread in which means 80 with an external thread are screwed into.

Fig. 4 shows a variant in which a ring 82 with holes aligned with the means 80 is provided to transfer load between the bolt heads and the lower part 64.

In the embodiment of the invention shown in the figures the lower part 64 and the upper part 66 are of different material. Preferably, the material of the lower part 64 is a steel, in particular a KWG (key cast) and more likely a 42CrMo4.

Preferably, the upper part 66 is made of a nodular cast iron or any cost-effective suitable material that does not need to be welded, for example even carbon fiber.

In the embodiment shown in Figs. 3 and 4 means 80 are provided to assume a positive locking engagement with the lower part 64 and the upper part 66.

## Claims

1. Pillar (52) suitable in and determined for a machine handling and/or processing logs with a lower part (64) and an upper part (66), wherein the lower part (64) is designed to be brought in contact with the rotary drive and to hold the pillar (52) in a cantilever fashion in a structure and the upper part is designed to receive a portion of a boom (28), **characterized in that** the lower part (64) and the upper part (66) are connected to each other releasably and are provided with flanges (76, 78) in their abutting area, wherein the flanges (76, 78) have the same or substantially the same diameter.

2. Pillar according to claim 1, whereas the lower part (64) and the upper part (66) are of the same or different material depending on the required capabilities.

3. Pillar according to claim 1 or 2, whereas the lower part (64) and the upper part (66) are forged or casted or welded, depending on the required capabilities.

4. Pillar according to either of the preceding claims, whereas the lower part (64) and/or the upper part (66) are substantially hollow.

5. Pillar according to either of the preceding claims, whereas means (80) are provided to assume a positive locking engagement with the lower part (64) and the upper part (66), in particular sleeves or pins extending through aligned holes in both parts, keys inserted in aligned apertures in both and similar.

6. Pillar according to either of the preceding claims, whereas the lower part (64) and the upper part (66) are bolted together.

7. Pillar according to claim 6, whereas a ring (82) or several elements of a ring (82) with holes aligned with bolts connecting the lower part (64) and the upper part (66) is provided to transfer load between bolt heads and the lower part (64) or the upper part (66).

8. Pillar according to claim 6 or 7, whereas the bolts extend through sleeves.

9. Pillar according to either of the preceding claims, whereas the lower part (64) and the upper part (66) are in positive locking engagement with each other, in particular in the kind of teeth, claws, dogs and similar are held in their position by bolts.

10. Pillar according to either of the preceding claims, whereas the lower part (64) and the upper part (66) are provided with matching threads to be screwed onto each other in a longitudinal direction of the pillar (52).

11. Pillar according to either of the preceding claims, whereas the lower part (64) has machine areas each to receive a bearing (68, 70) and a toothed part in between or elsewhere in the lower part (64).

12. Forest machine (10) comprising a pillar (52) according to any of the claims 1 to 11.

13. Arrangement (50) useful for supporting and moving a boom unit (28) of a forest machine (10) comprising a pillar (52) according to any of the claims 1 to 11.

## Patentansprüche

1. Säule (52), die für eine Maschine zum Behandeln und/oder Verarbeiten von Stämmen mit einem unteren Teil (64) und einem oberen Teil (66) geeignet und bestimmt ist, wobei der untere Teil (64) dazu ausgelegt ist, mit dem Drehantrieb in Kontakt gebracht zu werden und die Säule (52) in einer freitragenden Weise in einer Struktur zu halten, und der obere Teil dazu ausgelegt ist, einen Abschnitt eines Auslegers (28) aufzunehmen, **dadurch gekennzeichnet, dass** der untere Teil (64) und der obere Teil (66) lösbar miteinander verbunden sind und in ihrem angrenzenden Bereich mit Flanschen (76, 78) bereitgestellt sind,
wobei
die Flansche (76, 78) denselben oder im Wesentlichen denselben Durchmesser aufweisen.

2. Säule nach Anspruch 1, wobei der untere Teil (64) und der obere Teil (66) in Abhängigkeit von den geforderten Funktionen aus demselben oder aus unterschiedlichem Material sind.

3. Säule nach Anspruch 1 oder 2, wobei der untere Teil (64) und der obere Teil (66) in Abhängigkeit von den geforderten Funktionen geschmiedet, geklebt oder geschweißt sind.

4. Säule nach einem der vorangehenden Ansprüche, wobei der untere Teil (64) und/oder der obere Teil (66) im Wesentlichen hohl sind.

5. Säule nach einem der vorangehenden Ansprüche, wobei Mittel (80) bereitgestellt sind, um einen formschlüssigen Eingriff mit dem unteren Teil (64) und dem oberen Teil (66) zu übernehmen, insbesondere Hülsen oder Stifte, die sich durch Löcher erstrecken, die in beiden Teilen ausgerichtet sind, Schlüssel, die in Öffnungen eingeführt werden, die in beiden ausgerichtet sind, und ähnliches.

6. Säule nach einem der vorangehenden Ansprüche, wobei der untere Teil (64) und der obere Teil (66) zusammengeschraubt sind.

7. Säule nach Anspruch 6, wobei ein Ring (82) oder mehrere Elemente eines Rings (82) mit Löchern, die mit Schrauben ausgerichtet sind, die den unteren Teil (64) und den obere Teil (66) verbinden, bereitgestellt sind, um Last zwischen Schraubenköpfen und dem unteren Teil (64) oder dem oberen Teil (66) zu übertragen.

8. Säule nach Anspruch 6 oder 7, wobei sich die Schrauben durch Hülsen erstrecken.

9. Säule nach einem der vorangehenden Ansprüche, wobei der untere Teil (64) und der obere Teil (66) in formschlüssigem Eingriff miteinander stehen, insbesondere in der Art von Zähnen, Klauen, Nocken oder ähnlichem durch Schrauben in ihrer Position gehalten werden.

10. Säule nach einem der vorangehenden Ansprüche, wobei der untere Teil (64) und der obere Teil (66) mit passenden Gewinden bereitgestellt sind, um in einer Längsrichtung der Säule (52) aufeinander geschraubt zu werden.

11. Säule nach einem der vorangehenden Ansprüche, wobei der untere Teil (64) Maschinenbereiche aufweist, die jeweils dazu vorgesehen sind, ein Lager (68, 70) und einen gezahnten Teil dazwischen oder anderswo im unteren Teil (64) aufzunehmen.

12. Forstmaschine (10), umfassend eine Säule (52) nach einem der Ansprüche 1 bis 11.

13. Anordnung (50) zum Stützen und Bewegen einer Auslegereinheit (28) einer Forstmaschine (10), umfassend eine Säule (52) nach einem der Ansprüche 1 bis 11.

## Revendications

1. Montant (52) approprié à et défini pour une machine de manipulation et/ou de traitement de grumes ayant une partie inférieure (64) et une partie supérieure (66), la partie inférieure (64) étant conçue pour être mise en contact avec l'entraînement rotatif et pour maintenir le montant (52) en porte-à-faux dans une structure et la partie supérieure étant conçue pour recevoir une partie d'une flèche (28),
**caractérisé en ce que** la partie inférieure (64) et la partie supérieure (66) sont reliées l'une à l'autre de manière libérable et sont pourvues de brides (76, 78) dans leur zone de butée,
les brides (76, 78) ayant le même diamètre ou sensiblement le même diamètre.

2. Montant selon la revendication 1, la partie inférieure (64) et la partie supérieure (66) étant du même matériau ou d'un matériau différent en fonction des capacités requises.

3. Montant selon la revendication 1 ou 2, la partie inférieure (64) et la partie supérieure (66) étant forgées, coulées ou soudées, en fonction des capacités requises.

4. Montant selon l'une quelconque des revendications précédentes, la partie inférieure (64) et/ou la partie supérieure (66) étant sensiblement creuses.

5. Montant selon l'une quelconque des revendications précédentes, un moyen (80) étant fourni pour assumer une mise en prise à verrouillage positif avec la partie inférieure (64) et la partie supérieure (66), en particulier des manchons ou des broches s'étendant à travers des trous alignés dans les deux parties, des clés étant insérées dans des ouvertures alignées dans les deux et dans des éléments similaires.

6. Montant selon l'une quelconque des revendications précédentes, la partie inférieure (64) et la partie supérieure (66) étant boulonnées ensemble.

7. Montant selon la revendication 6, une bague (82) ou plusieurs éléments d'une bague (82) ayant des trous alignés avec des boulons reliant la partie inférieure (64) et la partie supérieure (66) étant fournis pour transférer la charge entre les têtes de boulon et la partie inférieure (64) ou la partie supérieure (66).

8. Montant selon la revendication 6 ou 7, les boulons s'étendant à travers les manchons.

9. Montant selon l'une quelconque des revendications précédentes, la partie inférieure (64) et la partie supérieure (66) étant en prise à verrouillage positif l'une avec l'autre, en particulier sous la forme de dents, griffes, crochets et éléments similaires étant maintenus dans leur position par des boulons.

10. Montant selon l'une quelconque des revendications précédentes, la partie inférieure (64) et la partie supérieure (66) étant pourvues de filets correspondants à visser l'un sur l'autre dans une direction longitudinale du montant (52).

11. Montant selon l'une quelconque des revendications précédentes, la partie inférieure (64) ayant des zones de machine destinées à recevoir chacune un palier (68, 70) et une partie dentée entre elles ou ailleurs dans la partie inférieure (64).

12. Machine forestière (10) comprenant un montant (52) selon l'une quelconque des revendications 1 à 11.

13. Agencement (50) utile pour supporter et déplacer une unité de flèche (28) d'une machine forestière (10) comprenant un montant (52) selon l'une quelconque des revendications 1 à 11.
